# EUROPÄISCHE PATENTANMELDUNG

(11) **EP 2 540 150 A1**
(43) Veröffentlichungstag der Anmeldung: **02.01.2013**
(21) Anmeldenummer: 12401121.4
(22) Anmeldetag: 18.06.2012
(51) Int. Cl.: A01C 15/00

(54) **Verriegelungselement für eine Schutzvorrichtung**

(30) Priorität: 29.06.2011 DE 102011051424
(71) Anmelder: Amazonen-Werke H. Dreyer GmbH & Co. KG, 49205 Hasbergen (DE)
(72) Erfinder: Johannaber, Stefan Jan, 49536 Lienen (DE); Walter, Achim, 49078 Osnabrück (DE)

(57) **Zusammenfassung**

Verriegelungselement (7) für eine Schutzvorrichtung (3) für Behälter landwirtschaftlicher Verteilmaschinen, die den Zugang zu bewegten Teilen innerhalb des Behälters verhindert, wobei das Verriegelungselement (7) die Schutzvorrichtung (3) in der Schutzstellung verriegelt und mittels eines Betätigungselementes (9) in eine Entriegelungsstellung bringbar ist, wobei die Schutzeinrichtung (3) auf der einen Seite mittels Gelenken an Behälterteilen schwenkbar befestigt ist und andererseits beabstandet zu den Gelenken mittels Auflageelementen (5, 6) an Behälterteilen anliegt. Um eine verbesserte Auflage der Schutzeinrichtung (3) im Bereich der Behälterwand und des Verriegelungselementes (7) zu schaffen, ist vorgesehen, dass die jeweiligen Auflageelemente (5, 6) zur Auflage der Schutzeinrichtung (3) in der Schutzstellung jeweils im Bereich der Verriegelungselemente (7) an Behälterteilen befestigt sind, und dass zumindest ein Auflageelement (5) mit einem Verriegelungselement (7) in Verbindung steht.

## Beschreibung

Die Erfindung betrifft einen Verriegelungselement für eine Schutzvorrichtung gemäß des Oberbegriffes des Patentanspruches 1.

Eine derartiges Verriegelungselement für eine Schutzvorrichtung ist durch die DE 103 48 067 B4 und DE 20 2007 007 024 U1 bekannt. Beiden Verbindungselementen ist gemeinsam, dass sie die Schutzeinrichtung in ihrer Schutzstellung verriegeln. Die Schutzeinrichtung ist als siebartiges Element ausgebildet und im oberen Bereich innerhalb eines Behälters einer Verteilmaschine angeordnet, um einen unbefugten Zugang zu sich in dem Behälter befindlichen motorisch bewegbaren Teilen zu verhindern. Das Verriegelungselement kann nur durch ein in einer Aussparung des Verbindungselementes einzusteckende Handhabe verschwenkt werden, so dass dann nur in bewusster Weise die Schutzvorrichtung aufgeklappt werden kann. Nachteilig ist bei dieser Ausgestaltung des Verriegelungselementes im Hinblick auf die Schutzeinrichtung, dass die Schutzeinrichtung sich an mehreren Stellen auf der Behälterinnenseite an der Behälterwand unmittelbar abstützt. Diese Abstützung ist nachteilig, weil hierdurch Farbe von der Behälterwand abgescheuert wird, welches dann zwangsweise zu unerwünschter Korrosion führt.

Der Erfindung liegt die Aufgabe zu Grunde, eine verbesserte Auflage der Schutzeinrichtung im Bereich der Behälterwand und des Verriegelungselementes zu schaffen.

Diese Aufgabe wird erfindungsgemäß dadurch gelöst, dass die jeweiligen Auflageelemente zur Auflage der Schutzeinrichtung in der Schutzstellung jeweils im Bereich der Verriegelungselemente an Behälterteilen befestigt sind, und dass zumindest ein Auflageelement mit einem Verriegelungselement in Verbindung steht.

Infolge dieser Maßnahme stützt sich die Schutzeinrichtung nicht unmittelbar auf der Behälterwand, sondern auf das an der Behälterwand befestigte Auflageelement ab. Hierzu ist das Auflageelement zur Auflage der Schutzeinrichtung in der Schutzstellung an der Behälterwand angeordnet bzw. an dieser befestigt, so dass die Schutzeinrichtungen keine Farbe von der Behälterwand abscheuern kann. Hierdurch wird eine sehr einfache und feste Auflagemöglichkeit der Schutzeinrichtung abgewandten bzw. deren Abstand an der Behälterwanderung durch die an der Behälterwand befestigten Auflageelemente erreicht.

Eine einfache Montage und Anordnung der Auflageelemente an der Behälterwand wird dadurch erreicht, dass das Auflageelement mit dem Verriegelungselemente verbunden ist. Hierdurch können Aufl. Elemente auf Verriegelungselementes in sehr einfacher Weise miteinander verbunden und an der Behälterwand befestigt werden.

Eine besonders vorteilhafte und kompakte Ausgestaltung von Verriegelungselementes und Auflageelement lässt sich dadurch erreichen, dass das jeweilige Auflageelement mit dem zugeordneten Verriegelungselement einstückig ausgebildet ist.

Eine vorteilhafte Ausgestaltung des Verriegelungselementes ergibt sich dadurch, dass das Verriegelungselement eine federnde Verriegelungsnase aufweist, dass das Auflageelement für die Schutzeinrichtung unterhalb der Verriegelungsnase angeordnet ist.

Eine vorteilhafte Sicherung der Schutzeinrichtungen in deren Schutzposition durch das Verriegelungselementes lässt sich dadurch erreichen, dass der Abstand zwischen dem unteren Ende der federnden Verriegelungsnase und der Oberfläche des Auflageelementes zur Auflage der Schutzeinrichtung zumindest der Dicke der Schutzeinrichtung im Bereich des Verriegelungselementes entspricht.

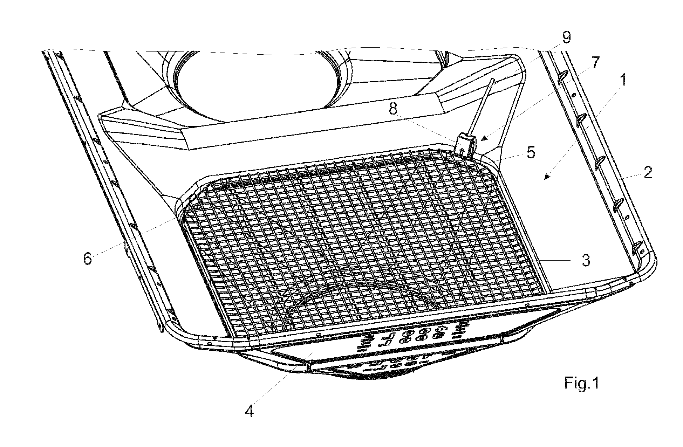

Weitere Einzelheiten der Erfindung sind der Beispielsbeschreibung und den Zeichnungen zu entnehmen. Hierbei zeigen
- Fig. 1: die in einem trichterförmigen Bereich eines Vorratsbehälters angeordnete Schutzvorrichtung mit Verriegelungselement in ein Teil Ansicht um perspektivischer Darstellung
- Fig. 2: das Verriegelungselement gemäß Fig. 1 in Verriegelungsstellung und in Seitenansicht und
- Fig. 3: das Verriegelungselement gemäß Fig. 2 in Entriegelungsstellung und in Seitenansicht.

In dem unteren Bereich 1, der trichterförmig ausgebildet ist, des Vorratsbehälters 2 einer landwirtschaftlichen Verteilmaschine ist die als Siebelement 3 ausgebildete Schutzvorrichtung angeordnet. Das Siebelement 3 ist auf der einen Seite mittels nicht dargestellten Gelenken an den als Behälterwand 4 ausgebildeten Behälterteilen des Behälters 2 schwenkbar befestigt. Andererseits liegt das Siebelement 3 beabstandet zu den Gelenken mittels Auflageelementen 5 und 6, die an den als Behälterwand 4 ausgebildeten Behälterteilen befestigt sind, an Behälterteilen 4, die von der Behälterwand gebildet werden, an.

Einem der Auflageelemente 5 ist ein Verriegelungselement 7 zugeordnet. Dieses Auflageelement 5 ist mit dem Verriegelungselement 7 verbunden und einstückig ausgebildet. Das Verriegelungselement 7 verweist die federnde Verriegelungsnase 8 auf. Das Auflageelement 5 für die Schutzeinrichtung 3 ist unterhalb der Verriegelungsnase 8 angeordnet. Der Abstand zwischen dem unteren Ende der federnden Verriegelungsnase 8 und der Oberfläche des Auflageelementes 5 zur Auflage der Schutzeinrichtung 3 entspricht zumindest der Dicke der Schutzeinrichtung 3 im Bereich des Verriegelungselementes 7.

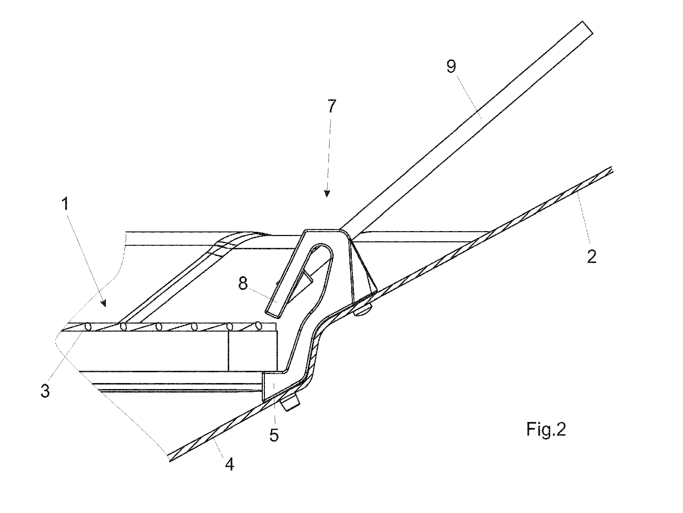

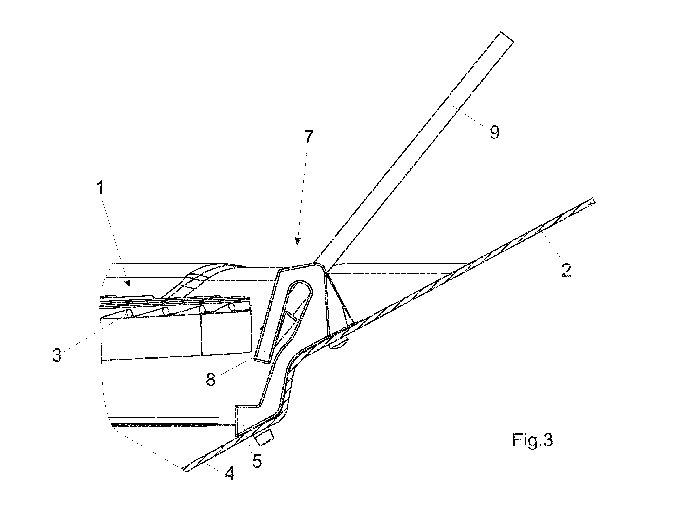

Die Verriegelungsnase 8 weist eine Aussparung auf, in welche ein Hebelelement 9 einzustecken ist. Mittels des Hebelelementes 9 kann die Verriegelungsnase 8 aus der in Fig. 2 dargestellten Verriegelungsposition in die in Fig. 3 dargestellte Entriegelungsposition verschwenkt werden, so dass das Siebelement 3, wie die Fig. 3 bereits zeigt, aus der Schutzstellung hochgeklappt werden kann.

Dadurch, dass das Siebelement 3, welches die Schutzeinrichtung bildet, nicht unmittelbar an der Wand 4 des Behälters 2 anliegt, sondern auf an der Behälterwand 4 befestigten Auflageelementen 5 und 6 aufliegt, wird eine schonende Auflage des Siebelementes 3 an der Behälterwand 4 erreicht, so dass das Siebelement 3 bzw. an dem Siebelement 3 befestigte Gegenlager nicht unmittelbar an der Behälterwand 4 anliegen und somit keine Farbe abschaben können.

Weiterhin wird eine vorteilhafte Ausgestaltung von Verriegelungselement 7 und Auflageelement 5 erreicht, weil das Auflageelement 5 und das zugeordnete Verriegelungselement 7 einstückig ausgebildet sind.

## Patentansprüche

1. Verriegelungselement für eine Schutzvorrichtung für Behälter landwirtschaftlicher Verteilmaschinen, die den Zugang zu bewegten Teilen innerhalb des Behälters verhindert, wobei das Verriegelungselement die Schutzvorrichtung in der Schutzstellung verriegelt und mittels eines Betätigungselementes in eine Entriegelungsstellung bringbar ist, wobei die Schutzeinrichtung auf der einen Seite mittels Gelenken an Behälterteilen schwenkbar befestigt ist und andererseits beabstandet zu den Gelenken mittels Auflageelementen an Behälterteilen anliegt, **dadurch gekennzeichnet, dass** die jeweiligen Auflageelemente (5, 6) zur Auflage der Schutzeinrichtung (3) in der Schutzstellung jeweils im Bereich der Verriegelungselemente (7) an Behälterteilen (4) befestigt sind, und dass zumindest ein Auflageelement (5) mit einem Verriegelungselement (7, 8) in Verbindung steht.

2. Verriegelungselement nach Anspruch 1, **dadurch gekennzeichnet, dass** das zumindest ein Auflageelement (5) mit dem Verriegelungselement (7, 8) verbunden ist.

3. Verriegelungselement nach zumindest einem der vorstehenden Ansprüche, **dadurch gekennzeichnet, dass** das jeweilige Auflageelement (5) mit dem zugeordneten Verriegelungselement (7, 8) einstückig ausgebildet ist.

4. Verriegelungselement nach zumindest einem der vorstehenden Ansprüche, **dadurch gekennzeichnet, dass** das
Verriegelungselement (7) eine federnde Verriegelungsnase (8) aufweist, dass das Auflageelement (5) für die Schutzeinrichtung (3) unterhalb der Verriegelungsnase (8) angeordnet ist.

5. Verriegelungselement nach zumindest einem der vorstehenden Ansprüche, **dadurch gekennzeichnet, dass** der Abstand zwischen dem unteren Ende der federnden Verriegelungsnase (8) und der Oberfläche des Auflageelementes (5) zur Auflage der Schutzeinrichtung (3) zumindest der Dicke der Schutzeinrichtung (3) im Bereich des Verriegelungselementes (7, 8) entspricht.
